# EUROPÄISCHE PATENTSCHRIFT

(11) **EP 0 398 278 B1**
(45) Veröffentlichungstag und Bekanntmachung des Hinweises auf die Patenterteilung: **05.10.1994**
(21) Anmeldenummer: 90109216.3
(22) Anmeldetag: 16.05.1990
(51) Int. Cl.: C04B 35/00, C04B 35/04, C04B 35/64

(54) **Verfahren zur Herstellung eines keramischen Gemenges, insbesondere eines feuerfesten Gemenges**
Process for the production of a ceramic mixture, especially a refractory mixture
Procédé pour la préparation d'un mélange céramique, en particulier un mélange réfractaire

(30) Priorität: 17.05.1989 DE 3916044
(43) Veröffentlichungstag der Anmeldung: 22.11.1990
(73) Patentinhaber: DYKO INDUSTRIEKERAMIK GMBH, D-40521 Düsseldorf (DE)
(72) Erfinder: Gebhardt, Franz, Prof. Dr. rer. nat., D-5120 Würselen (DE); Rymon-Lipinski, Tadeusz, Dr., D-5300 Bonn (DE)
(74) Vertreter: Rehberg, Elmar, Dipl.-Ing.

(56) Entgegenhaltungen:
- EP-A- 0 135 839
- EP-A- 0 273 982
- EP-A- 0 299 774
- DE-A- 2 431 845
- GB-A- 2 216 117
- CHEMICAL ABSTRACTS, vol. 90, no. 2, 01 August 1979 Columbus, Ohio, USA H.MAEDA et al.:"RAW BASIC REFRACTORY MIXES" Seite 308; rechte Spalte; ref. no. 11326V & JP-A-71804612 (NIPPON KOKAN K.K., SHINAGAWA REFRACTORIES CO., LTD.)

## Beschreibung

Die Erfindung betrifft ein Gemenge für ein keramisches Erzeugnis, ein keramisches geformtes Erzeugnis im Grünzustand sowie ein Verfahren zur Herstellung eines solchen geformten Erzeugnisses, und zwar jeweils mit den Merkmalen der unabhängigen Ansprüche 1, 2 und 3.

Bei der Herstellung keramischer Erzeugnisse ist es üblich, dem Gemenge ein Bindemittel beizumischen. Das Bindemittel hat die Aufgabe, dem aus dem Gemenge geformten Erzeugnis eine gute Formbeständigkeit und Kaltdruckfestigkeit zu verleihen. Darüberhinaus kann das Bindemittel auch die Aufgabe haben, den Sinterprozeß zu begünstigen und die Festigkeit des Erzeugnisses nach dem Brennen zu erhöhen.

Dem Gemenge für basische feuerfeste Erzeugnisse werden häufig als Bindemittel anorganische Substanzen, beispielsweise MgCl₂, MgSO₄ o. ä. als wässrige Lösungen zugesetzt. Bei Verwendung solcher anorganischer Substanzen entstehen beim Aufheizen infolge Hydrolyse bzw. Oxidation in der Regel Stoffe, die als umweltfeindlich einzustufen sind, nämlich beispielsweise HCl, Cl₂, SO₂.

Als Bindemittel für nicht basische feuerfeste Erzeugnisse werden häufig Phosphorsäure bzw. wässrige Lösungen einiger ihrer Salze (z. B. Aluminiumphosphat, Al-Cr-Phosphat) verwendet. Auch in diesem Fall entstehen beim Aufheizen umweltfeindliche Gase.

Bei der Herstellung von kohlenstoffhaltigen keramischen Erzeugnissen ist es ferner bekannt, als Bindemittel dem Gemenge organische Substanzen, wie Pech oder Kunstharz, zuzusetzen. Während der thermischen Behandlung entstehen jedoch aus derartigen Bindemitteln gesundheitsschädliche Substanzen.

Die nachveröffentlichte GB 2 216 117 A beschreibt die Verwendung langkettiger Fettsäuren als Bindemittel. Dabei soll die Aufgabe gelöst werden, eine feuerfeste Masse bereitzustellen, welche lagerfähig und längere Zeit verarbeitungsfähig bleibt, so daß sie als Stampf- oder Preßmasse verarbeitet werden kann und nach ihrer Anwendung, d. h. beim Aufheizen, eine rißfreie Auskleidung ohne Fugen ergibt, die eine hohe Widerstandsfähigkeit gegenüber Schlackenangriff und Rißbildung besitzt. Zur Lösung dieser Aufgabe werden als temporäres Bindemittel langkettige Fettsäuren in Verbindung mit reaktionsfähigem MgO eingesetzt. Völlig folgerichtig wird deshalb darauf hingewiesen, daß die eingesetzten langkettigen organischen Fettsäuren Kohlenstoffzahlen oberhalb von 8 aufweisen. Als Beispiel für ungesättigte Fettsäuren werden z. B. Ölsäure und Linolensäure angegeben.

Die DE-A-24 31 845 beschreibt ein Verfahren zur Herstellung von Sintermagnesia, wobei das feuerfeste Ausgangsmaterial vor dem Brennen mit einer wässrigen Lösung eines wasserlöslichen Calziumsalzes, das beim Brennen Calziumoxid bildet, in Berührung gebracht wird. Dabei zielt die dortige Erfindung darauf ab, auf möglichst einfache und billige Weise eine Verbesserung des Ausgangsmaterials hinsichtlich des CaO/SiO₂-Verhältnisses zu erreichen. Über die Anwendung und Ausbildung eines Bindemittels wird keine Aussage gemacht.

Der Erfindung liegt die Aufgabe zugrunde, ein Bindemittel für ein Gemenge für ein keramisches Erzeugnis, auch für ein geformtes Erzeugnis im Grünzustand sowie ein Herstellungsverfahren für ein gebranntes Erzeugnis aufzuzeigen, bei dessen Benutzung bei der Herstellung keine gesundheitsgefährdenden Substanzen entstehen und welches die Grundlage bietet, letztendlich in geformtem Zustand hohe Festigkeiten zu erbringen.

Erfindungsgemäß wird dies bei dem Gemenge der eingangs beschriebenen Art dadurch erreicht, daß die als Bindemittel dienende organische Säure Laevulinsäure in einer Menge von 0,5 bis 10 Gewichts-% ist und/oder als Salz der Säure Calziumlaevulinat und/oder Calziumlaevulinat in Lösung in einer Menge von 0,5 bis 10 Gewichts-% eingesetzt wird, und daß wenigstens ein Hauptbestandteil des Gemenges ein Metalloxid ist, das mit der Laevulinsäure und/oder dem Calziumlaevulinat und/oder Calziumlaevulinat in Lösung bei verhältnismäßig niedrigen Temperaturen unter Bildung einer metallorganischen Verbindung reagiert, die sich ihrerseits bei Brenntemperatur unter Bildung sehr feinkörniger, feuerfester Bestandteile zersetzt.

Der aus einem keramischen Gemenge gebildete Formkörper im Grünzustand kennzeichnet sich erfindungsgemäß dadurch, daß wenigstens ein Hauptbestandteil des Gemenges ein Metalloxid ist, daß das Bindemittel Laevulinsäure und/oder Calziumlaevulinat und/oder Calziumlaevulinat in Lösung in einer Menge von 0,5 bis 10 Gewichts-% ist, und daß die Laevulinsäure und/oder das Calziumlaevulinat und/oder Calziumlaevulinat in Lösung mit dem Metalloxid bei verhältnismäßig niedrigen Temperaturen ganz oder teilweise zu einer metallorganischen Verbindung als temporäre Bindung reagiert hat.

Es wird ein Verfahren zur Herstellung eines keramischen geformten Erzeugnisses mit den Merkmalen des Anspruchs 3 aufgezeigt.

Das Verfahren zur Herstellung eines geformten Erzeugnisses kennzeichnet sich weiterhin dadurch, daß das Verpressen des das Bindemittel enthaltenden Gemenges zur Bildung des geformten Erzeugnisses bei einer Temperatur oberhalb der Schmelztemperatur der Laevulinsäure und/oder der Schmelztemperatur des Calziumlaevulinats erfolgt.

Mit den Merkmalen der Hauptansprüche wird eine Doppelfunktion erreicht:
Es wird zunächst durch eine chemische Reaktion eine temporäre Bindung erreicht, bei der die Körner des Gemenges von Säure benetzt und umhüllt werden, so daß brückenartige Verbindungen zwischen den benachbarten Körnern des Gemenges entstehen.

Die zweite Reaktion bezieht sich auf die Anwendung erhöhter Temperaturen im Bereich der Brenntemperaturen. Hierbei zersetzen sich die bei tieferen Temperaturen entstandenen metallorganischen Verbindungen, und es entsteht ein sehr feinkörniges feuerfestes Oxidpulver, welches den bei Brenntemperatur ablaufenden Sintervorgang in der Weise begünstigt, daß die Feinheit des Oxidpulvers zu einer erhöhten Sinteraktivität führt.

Mit Hilfe der erfindungsgemäßen Bindemittel lassen sich sowohl geformte Erzeugnisse als auch ungeformte Massen wie Betone, Stampfmassen usw. herstellen.

Von besonderem Vorteil bei der Anwendung der Erfindung sind unter anderem die einfache Handhabung der erfindungsgemäßen Substanzen sowie die einfache und leichte Aufbereitung der entsprechenden Gemenge bzw. Gemische. Die erfindungsgemäßen Substanzen werden nämlich einfach während des Mischvorgangs dem Gemenge beigemischt. Der Herstellungsvorgang des Gemenges ist identisch mit der aus der Technologie der Feuerfest-Werkstoffe bekannten Vorgehensweise, und es sind keine neuen oder zusätzlichen Anlagen hierfür erforderlich.

Die bindende Wirkung der genannten organischen Säuren bzw. ihrer Salze beruht in erster Linie auf einer chemischen Reaktion mit dem Hauptbestandteil des Gemenges. Bei der Verwendung dieser organischen Säuren werden die Körner des Gemenges von der Säure benetzt und umhüllt, und es entstehen durch die chemische Reaktion, die zur Bildung von metallorganischen Verbindungen führt, brückenartige Verbindungen zwischen den benachbarten Körnern des Gemenges. Ähnlich ist die Wirkungsweise bei der Verwendung von Salzen der organischen Säuren. Auch in diesem Fall bilden sich aus den Salzen und den hiermit in Berührung stehenden Gemengekörnern vor allem bei erhöhter Temperatur andere metallorganische Verbindungen, die zu einer gegenseitigen Fixierung benachbarter Gemengekörner führen. Besonders gute Ergebnisse werden erzielt, wenn bei der Aufbereitung des Gemenges, und insbesondere beim Verpressen, Temperaturen angewendet werden, die oberhalb des Schmelzpunktes der verwendeten Salze der organischen Säuren liegen.

Bei der Brenntemperatur setzt aber in jedem Fall ein zweiter Reaktionsvorgang ein, der seinerseits den Sintervorgang begünstigt. Bei diesen Temperaturen zersetzen sich nämlich die bei tieferen Temperaturen entstandenen metallorganischen Verbindungen. Dabei entstehen sehr feinkörnige feuerfeste Oxidpulver, die wiederum den Sintervorgang günstig beeinflussen. Auch die bei der Zersetzung bei den Brenntemperaturen entstehenden oxidischen und/oder nichtoxidischen Reste können als solche feuerfeste Bestandteile sein, oder sie bilden in einer Reaktion mit den Gemengebestandteilen feuerfeste Bestandteile.

Nachfolgend wird die Erfindung anhand verschiedener Beispiele im einzelnen erläutert, wobei als Maß für die Wirkung der erfindungsgemäßen Bindemittel die Kaltdruckfestigkeit (KDF) und/oder die Heißbiegefestigkeit (HBF) von Probekörpern ermittelt wurde. Die Messung der Kaltdruckfestigkeit erfolgte nach der Methode, wie sie in DIN 51 067 festgelegt ist. Zur Messung der Heißbiegefestigkeit wurde die Meßmethode nach DIN 51 048 angewendet.

### Beispiel 1

Ein feinkörniges Gemenge aus Magnesiumoxid mit einer Korngröße < 0,2 mm wurde mit Laevulinsäure gemischt, wobei jeweils auf 100 Gewichtsteile Gemenge 3 Gewichtsteile Säure entfielen. Aus den Mischungen wurden in einem Preßvorgang bei einem Druck von 300 MPa zylindrische Probekörper von 20 mm Durchmesser und 20 mm Höhe hergestellt. Nach dem Pressen wurden die Probekörper 2 Stunden lang in Luft bei 1500°C gebrannt. Darauf erfolgte die Bestimmung der Kaltdruckfestigkeit. Die Bestimmung ergab eine Kaltdruckfestigkeit von 75,5 N/mm². Der Vergleichsversuch an einer Probe ohne Zusatz von Bindemittel ergab eine Kaltdruckfestigkeit von 38,2 N · mm⁻².

### Beispiel 2

Ein feinkörniges Aluminiumoxid-Gemenge (Korngröße < 40 Mikrometer) wurde bei einem Preßdruck von 300 MPa einmal ohne Bindemittel und einmal mit 3 Gewichtsteilen Laevulinsäure auf 100 Gewichtsteile Gemenge zu zylindrischen Probekörpern (Durchmesser 20 mm, Höhe 20 mm) verpreßt. Die Preßlinge wurden bei 1500°C in Luft 2 Stunden lang gebrannt. Die Proben ohne Bindemittelzusatz besaßen nach dem Brand KDF-Werte von 135 N · mm⁻², während die Proben mit Zusatz von Laevulinsäure KDF-Werte von 234 N · mm⁻² aufwiesen.

### Beispiel 3

44,4 Gewichtsteile eines MgO-Gemenges mit einer Kornfraktion < 0,2 mm und 55,6 Gewichtsteile des gleichen MgO-Gemenges mit einer Kornfraktion von 0,2 bis 2 mm wurden in einem Mischer mit 3 Gewichtsteilen Laevulinsäure CH₃-CO-CH₂-CH₂-COOH gemischt. Aus der Mischung wurden bei einem Preßdruck von 100 MPa zylindrische Probekörper mit einem Durchmesser von 50 mm und einer Höhe von ebenfalls 50 mm hergestellt. Die Probekörper wurden nach dem Pressen 2 Stunden lang bei 110°C getrocknet. Die getrockneten Probekörper hatten eine Kaltdruckfestigkeit (KDF) von 63,5 N · mm⁻².

### Beispiel 4

33,3 Gewichtsteile eines MgO-Gemenges mit einer Kornfraktion < 0,2 mm, 55,6 Gewichtsteile des gleichen MgO-Gemenges mit einer Kornfraktion von 0,2 bis 2 mm und 11,1 Gewichtsteile eines Flockengraphits wurden in einem Mischer mit 3 Gewichtsteilen Laevulinsaeure gemischt. Aus der Mischung wurden bei einem Pressdruck von 100 MPa zylindrische Probekoerper von 50 mm Durchmesser und 50 mm Hoehe hergestellt. Die Probekoerper wurden 2 Stunden lang bei 110 Grad Celsius getrocknet. Die Kaltdruckfestigkeit der getrockneten Presslinge betrug 37 N·mm⁻².

### Beispiel 5

Einem Gemenge aus zwei Kornfraktionen von Magnesiumoxid, wie es in Beispiel 3 beschrieben wurde, wurden 3 Gewichtsprozent einer gesaettigten waessrigen Loesung von Calciumlaevulinat zugesetzt. Nach dem Verpressen bei einem Pressdruck von 100 MPa und einem 2 Stunden langen Trocknen bei 110 Grad Celsius wiesen die Probekoerper (Durchmesser 50 mm, Hoehe 50 mm) KDF-Werte von 35 N·mm⁻² auf.

### Beispiel 6

Ein Gemenge aus zwei Kornfraktionen von MgO, wie es in Beispiel 3 beschrieben wurde, wurde mit verschiedenen Mengen Calciumlaevulinat vermischt. Die Mischungen wurden in einer Stahlpressform auf eine Temperatur von etwa 160 Grad Celsius erhitzt, das heisst auf eine Temperatur, die oberhalb der Schmelztemperatur von Calciumlaevulinat liegt. Nach Erreichen dieser Temperatur erfolgte das eigentliche Pressen bei einem Pressdruck von 100 MPa. Nach dem Abkuehlen wurde an den Probekoerpern die KDF-Bestimmung durchgefuehrt. Dabei ergaben sich folgende Werte:

| Gewichtsteile Calciumlaevulinat auf 100 Gewichtsteile MgO-Gemenge | KDF (N·mm⁻²) |
|---|---|
| 1 | 1,5 |
| 3 | 8,9 |
| 5 | 13,9 |
| 6 | 24,3 |
| 7 | 25,3 |
| 8 | 44,0 |
| 9 | 53,0 |

### Beispiel 7

Es wurde ein Gemenge aus zwei Kornfraktionen MgO und Flockengraphit wie in Beispiel 4 beschrieben mit unterschiedlichen Mengen Calciumlaevulinat vermischt. Die Mischungen wurden in einer Stahlpressform auf eine Temperatur von 160 Grad Celsius, das heisst auf eine Temperatur oberhalb des Schmelzpunktes von Calciumlaevulinat, erhitzt. Nach Erreichen dieser Temperatur wurden die Proben bei einem Druck von 100 MPa verpresst. Nach dem Abkuehlen wurde an den Probekoerpern die KDF-Bestimmung durchgefuehrt. Sie ergab folgende Werte:

| Gewichtsteile Calciumlaevulinat auf 100 Gewichtsteile Gemenge | KDF (N·mm⁻²) |
|---|---|
| 3 | 10,5 |
| 5 | 22,9 |
| 6 | 31,5 |
| 7 | 32,7 |
| 8 | 54,4 |

### Beispiel 8

100 Gewichtsteile eines Gemenges auf zwei Kornfraktionen von MgO, wie es in Bei spiel 3 beschrieben wurde, wurden unter Zusatz einer waessrigen Loesung von Calciumlaevulinat (3 Gewichtsteile Calciumlaevulinat, 8 Gewichtsteile Wasser) zu einer betonartigen Masse aufgearbeitet. Nach dem Mischen wurde die Masse auf einem Vibrationstisch zu Probekoerpern von 230 x 68 x 56 mm³ verdichtet. Die Probekoerper wurden 24 Stunden lang bei 110 Grad Celsius getrocknet. Danach wurde an den Probekoerpern die Kaltdruckfestigkeit betimmt. Sie lag bei 52 N·mm⁻².

### Beispiel 9

Aus einem Sintermagnesia, wie es in Beispiel 3 beschrieben wurde, wurden zylindrische Probekoerper mit einem Durchmesser von 50 mm und einer Hoehe von 50 mm hergestellt, und zwar einmal ohne Bindemittelzusatz und einmal mit einem Zusatz von 3 Gewichtsteilen Laevulinsaeure auf 100 Teile Sintergemisch. Die Probekoerper wurden 2 Stunden lang in Luft bei 1500 Grad Celsius gebrannt. Darauf erfolgte einerseits die Bestimmung der Kaltdruckfestigkeit (KDF) und andererseits bei einer Temperatur von 1400 Grad Celsius die Bestimmung der Heissbiegefestigkeit. Dabei ergaben sich folgende Werte:

| | KDF (N·mm⁻²) | HBF (N·mm⁻²) |
|---|---|---|
| ohne Bindemittelzusatz | 45,1 | 4,5 |
| mit Zusatz von Laevulinsaeure | 68 | 8,6 |

### Beispiel 10

Es wurde ein Sintermagnesia-Gemisch hergestellt aus 44,4 Gewichtsteilen einer Kornfraktion < 0,2 mm und 55,6 Gewichtsteilen einer Kornfraktion 0,2 bis 2 mm. 100 Teile dieses Sintermagnesia-Gemisches wurden mit jeweils 3 Gewichtsteilen Laevulinsäure gemischt. Aus der Mischung wurden zylindrische Probekörper mit 50 mm Durchmesser und 50 mm Höhe hergestellt. Als Vergleichsproben wurden Proben ohne jeden Zusatz verwendet. Die Probekörper wurden 2 Stunden in Luft bei 1500°C gebrannt. Nach Abkühlung der Probekörper erfolgte die Bestimmung der Kaltdruckfestigkeit.

Die Bestimmung der Kaltdruckfestigkeit (KDF) ergab folgende Werte:

| Bindemittel | KDF (N · mm⁻²) |
|---|---|
| ohne Laevulinsäure | 45,1 |
| mit Laevulinsäure | 68 |

### Beispiel 11

Ein Al₂O₃-Sinter-Gemisch aus 44,4 Gewichtsteilen einer Kornfraktion < 0,3 mm und 55,6 Gewichtsteilen einer Kornfraktion von 0,2 bis 2 mm wurde mit Laevulinsäure gemischt, wobei 3 Gewichtsteile der Säure zugesetzt wurden. Aus diesen Mischungen wurden zylindrische Probekörper von 50 mm Durchmesser und 50 mm Höhe bei einem Preßdruck von 100 MPa hergestellt. Als Vergleichskörper wurden Probekörper ohne jeden Zusatz verwendet. Die Probekörper wurden 2 Stunden lang in Luft bei 1500°C gebrannt. Nach dem Abkühlen erfolgte die Bestimmung der KDF.

Folgende Werte für die KDF wurden gemessen:

| Bindemittel | KDF (N · mm⁻²) |
|---|---|
| ohne Laevulinsäure | 36,5 |
| mit Laevulinsäure | 46,5 |

## Patentansprüche

1. Gemenge für ein keramisches, insbesondere feuerfestes, Erzeugnis, wobei das Gemenge oxidische Bestandteile und eine organische säure als Bindemittel aufweist, dadurch gekennzeichnet, daß die als Bindemittel dienende organische Säure Laevulinsäure in einer Menge von 0,5 bis 10 Gew.-% ist und/oder als Salz der Säure Calciumlaevulinat und/oder Calciumlaevulinat in Lösung in einer Menge von 0,5 bis 10 Gew.-% eingesetzt wird, und daß wenigstens ein Hauptbestandteil des Gemenges ein Metalloxid ist, das mit der Laevulinsäure und/oder dem Calciumlaevulinat und/oder Calciumlaevulinat in Lösung bei verhältnismäßig niedrigen Temperaturen unter Bildung einer metallorganischen Verbindung reagiert, die sich ihrerseits bei Brenntemperatur unter Bildung sehr feinkörniger, feuerfester Bestandteile zersetzt.

2. Aus einem keramischen Gemenge gebildeter Formkörper im Grünzustand, wobei das Gemenge oxidische Bestandteile und eine organische Säure als Bindemittel aufweist, dadurch gekennzeichnet, daß wenigstens ein Hauptbestandteil des Gemenges ein Metalloxid ist, daß das Bindemittel Laevulinsäure und/oder Calciumlaevulinat und/oder Calciumlaevulinat in Lösung in einer Menge von 0,5 bis 10 Gew.-% ist, und daß die Laevulinsäure und/oder das Calciumlaevulinat und/oder das Calciumlaevulinat in Lösung mit dem Metalloxid bei verhältnismäßig niedrigen Temperaturen ganz oder teilweise zu einer metallorganischen Verbindung als temporäre Bindung reagiert hat.

3. Verfahren zur Herstellung eines keramischen, insbesondere feuerfesten, geformten Erzeugnisses aus einem Gemenge, das oxidische Bestandteile und eine organische Säure als Bindemittel aufweist, dadurch gekennzeichnet, daß als wenigstens ein Hauptbestandteil des Gemenges ein Metalloxid eingesetzt wird, daß dem Gemenge als Bindemittel Laevulinsäure und/oder Calciumlaevulinat und/oder Calciumlaevulinat in Lösung in einer Menge von 0,5 bis 10 Gew.-% hinzugefügt wird, so daß die Laevulinsäure und/oder das Calciumlaevulinat und/oder das Calciumlaevulinat in Lösung mit dem Metalloxid bei verhältnismäßig niedrigen Temperaturen ganz oder teilweise zu einer metallorganischen Verbindung als temporäre Bindung reagiert.

4. Verfahren nach Anspruch 3, dadurch gekennzeichnet, daß das Verpressen des das Bindemittel enthaltenden Gemenges zur Bildung des geformten Erzeugnisses bei einer Temperatur oberhalb der Schmelztemperatur der Laevulinsäure oder der Schmelztemperatur des Calciumlaevulinats erfolgt.

## Claims

1. Composition for a ceramic, particularly refractory, product, in which the composition has oxidic constituents and an organic acid as binder, characterised in that the organic acid serving as binder is laevulic acid in a proportion of 0.5 to 10% by weight and/or calcium laevulinate and/or calcium laevulinate in solution in a proportion of 0.5 to 10% by weight is used as salt of the acid, and that at least a principal constituent of the composition is a metal oxide which reacts with the laevulic acid and/or the calcium laevulinate and/or calcium laevulinate in solution at comparatively low temperatures and forms an organo-metallic compound which in turn decomposes at the firing temperature forming very fine-grained refractory constituents.

2. Shaped product in the green state formed from a ceramic composition, in which the composition has oxidic constituents and an organic acid as binder, characterised in that at least a principal constituent of the composition is a metal oxide, that the binder is laevulic acid and/or calcium laevulinate and/or calcium laevulinate in solution in a proportion of 0.5 to 10% by weight, and that the laevulic acid and/or the calcium laevulinate and/or calcium laevulinate in solution has reacted at comparatively low temperatures with the metal oxide totally or partially to form an organometallic compound as temporary bond.

3. Method of producing a ceramic, particularly refractory, shaped product from a composition having oxidic constituents and an organic acid as binder, characterised in that a metal oxide is used at least as a principal constituent of the composition, that laevulic acid and/or calcium laevulinate and/or calcium laevulinate in solution in a proportion of 0.5 to 10% by weight is added as binder to the composition, so that the laevulic acid and/or the calcium laevulinate and/or calcium laevulinate in solution reacts at comparatively low temperatures with the metal oxide totally or partially to form an organometallic compound as temporary bond.

4. Method according to Claim 3, characterised in that the pressing of the composition containing the binder to form the shaped product takes place at a temperature above the melting temperature of laevulic acid or the melting temperature of calcium laevulinate.

## Revendications

1. Mélange pour un produit céramique, en particulier pour un produit réfractaire, dans lequel le mélange présente des constituants oxydiques et un acide organique en tant que liant,
**caractérisé** en ce que l'acide organique servant de liant est de l'acide lévulinique à raison de 0,5 à 10% en poids et/ou sous la forme de lévulinate de calcium, en tant que sel de l'acide et/ou du lévulinate de calcium en solution, utilisé en quantité de 0,5 à 10% en poids, et en ce qu'au moins un constituant principal du mélange est un oxyde métallique qui réagit avec l'acide lévulinique et/ou avec le lévulinate de calcium et/ou avec le lévulinate de calcium en solution, à des températures relativement basses, en formant un composé organométallique qui, de son côté, se décompose à la température de cuisson en formant des constituants réfractaires à grain très fin.

2. Corps moulé formé à l'état vert à partir d'un mélange céramique, le mélange présentant des constituants oxydiques et un acide organique en tant que liant,
**caractérisé** en ce qu'au moins un constituant principal du mélange est un oxyde métallique, en ce que le liant est de l'acide lévulinique et/ou du lévulinate de calcium et/ou du lévulinate de calcium en solution, en quantité de 0,5 à 10% en poids, et en ce que l'acide lévulinique et/ou le lévulinate de calcium et/ou le lévulinate de calcium en solution a réagi complètement ou partiellement avec l'oxyde métallique à des températures relativement basses en formant un composé organométallique en tant que liaison temporaire.

3. Procédé de fabrication d'un produit céramique moulé, en particulier d'un produit réfractaire, à partir d'un mélange présentant des constituants oxydiques et un acide organique en tant que liant,
**caractérisé** en ce qu'on utilise un oxyde métallique en tant qu'au moins un constituant principal du mélange, en ce qu'on ajoute au mélange, en tant que liant, de l'acide lévulinique et/ou du lévulinate de calcium et/ou du lévulinate de calcium en solution, en quantité de 0,5 à 10% en poids, de telle sorte que l'acide lévulinique et/ou le lévulinate de calcium et/ou le lévulinate de calcium en solution réagit complètement ou partiellement avec l'oxyde métallique à des températures relativement basses en formant un composé organométallique en tant que liaison temporaire.

4. Procédé selon la revendication 3, caractérisé en ce que le pressage du mélange contenant le liant pour former le produit moulé a lieu à une température supérieure à la température de fusion de l'acide lévulinique ou à la température de fusion du lévulinate de calcium.
